# DEMANDE DE BREVET EUROPEEN

(11) **EP 4 371 441 A1**
(43) Date de publication de la demande: **22.05.2024**
(21) Numéro de dépôt: 22207937.8
(22) Date de dépôt: 17.11.2022
(51) Int. Cl.: A44C 5/00, A44C 17/02, B29C 45/14

(54) **FABRICATION D'UN BRIN DE BRACELET**

(71) Demandeur: ROLEX SA, 1211 Genève 26 (CH)
(72) Inventeur: DI PIAZZA, Philippe, CH-1211 Geneve (CH)
(74) Mandataire: Moinas & Savoye SARL

(57) **Abrégé**

Procédé de fabrication d'un brin de bracelet (10), caractérisé en ce qu'il comprend les étapes suivantes :
- Positionner un insert (15) au sein d'une cavité (21) d'un moule de fabrication (20) ;
- Positionner au moins un élément de fixation (12) sur ledit insert (15) par l'intermédiaire d'au moins un élément de guidage (35) ;
- Remplir le moule de fabrication (20) avec un matériau de sorte à surmouler, c'est à dire envelopper au moins partiellement et fixer, l' insert (15) et l'au moins un élément de fixation (12) dans le matériau ;
- Démouler le brin de bracelet (10) du moule de fabrication (20), ce brin de bracelet (10) étant au moins en partie formé par ledit matériau, l'insert (15), et l'au moins un élément de fixation (12).

## Description

### Introduction

La présente invention concerne un procédé de fabrication d'un brin de bracelet. Elle porte aussi sur un brin de bracelet en tant que tel, ainsi qu'une pièce d'horlogerie comprenant un tel brin de bracelet.

### Etat de l'Art

Dans le domaine de l'horlogerie, il est parfois souhaité d'ajouter des éléments d'ornement sur un brin de bracelet. Plus généralement, il peut être souhaité d'ajouter différents éléments et/ou fonctionnalités à un brin de bracelet.

Pour réaliser un tel ajout, il est exigé d'atteindre tout ou partie des objectifs suivants :
- Un résultat satisfaisant sur le plan esthétique et sur le plan du confort au porter ;
- Un résultat aux propriétés mécaniques satisfaisantes ;
- Un résultat fiable et robuste ;
- Un résultat aisé à obtenir, et ce de manière répétable.

Ainsi, le but général de la présente invention est de proposer une solution de fabrication d'un brin de bracelet comprenant au moins un élément complémentaire et/ou une fonctionnalité supplémentaire, tout en présentant un résultat esthétiquement attractif, aux propriétés mécaniques satisfaisantes, fiable et robuste, et aisé à obtenir, et ce de manière répétable.

### Brève description de l'invention

A cet effet, l'invention repose sur un procédé de fabrication d'un brin de bracelet, caractérisé en ce qu'il comprend les étapes suivantes :
- Positionner un insert au sein d'une cavité d'un moule de fabrication ;
- Positionner au moins un élément de fixation sur ledit insert par l'intermédiaire d'au moins un élément de guidage ;
- Remplir le moule de fabrication avec un matériau de sorte à surmouler, c'est à dire envelopper au moins partiellement et fixer, l'insert et l'au moins un élément de fixation dans le matériau ;
- Démouler le brin de bracelet du moule de fabrication, ce brin de bracelet étant au moins en partie formé par ledit matériau, l'insert, et l'au moins un élément de fixation.

L'invention porte aussi sur un brin de bracelet à base d'un matériau, caractérisé en ce qu'il comprend un insert, et au moins un élément de fixation, reposant sur l'insert ou étant fixé sur l'insert, surmoulés par ledit matériau, c'est-à-dire enveloppés au moins partiellement et fixés par le matériau.

L'invention est plus précisément définie par les revendications.

### Brève description des figures

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente une première vue en coupe d'un moule de fabrication d'un brin de bracelet selon un mode de réalisation de l'invention.
La figure 2 représente une deuxième vue en coupe du moule de fabrication d'un brin de bracelet selon le mode de réalisation de l'invention.
Les figures 3 à 5 représentent des vues schématiques en coupe d'étapes d'un procédé de fabrication d'un brin de bracelet selon un premier mode de réalisation de l'invention.
La figure 6 représente une vue partielle agrandie en coupe d'un brin de bracelet selon une première variante de réalisation obtenu par le procédé selon le premier mode de réalisation de l'invention.
La figure 7 représente une vue partielle agrandie en coupe d'un brin de bracelet selon une deuxième variante de réalisation obtenu par le procédé selon le premier mode de réalisation de l'invention.
Les figures 8 et 9 représentent des vues schématiques en coupe d'étapes d'un procédé de fabrication d'un brin de bracelet selon un deuxième mode de réalisation de l'invention.
La figure 10 représente une vue partielle agrandie en coupe d'un brin de bracelet selon une première variante de réalisation obtenu par le procédé selon le deuxième mode de réalisation de l'invention.

Par la suite, nous utiliserons les adjectifs « supérieur » et « inférieur » en référence au futur positionnement du brin de bracelet. Par exemple, dans le cas d'un brin de bracelet, l'adjectif inférieur désigne l'orientation destinée à venir du côté du poignet d'un porteur et l'adjectif supérieur désigne l'orientation opposée.

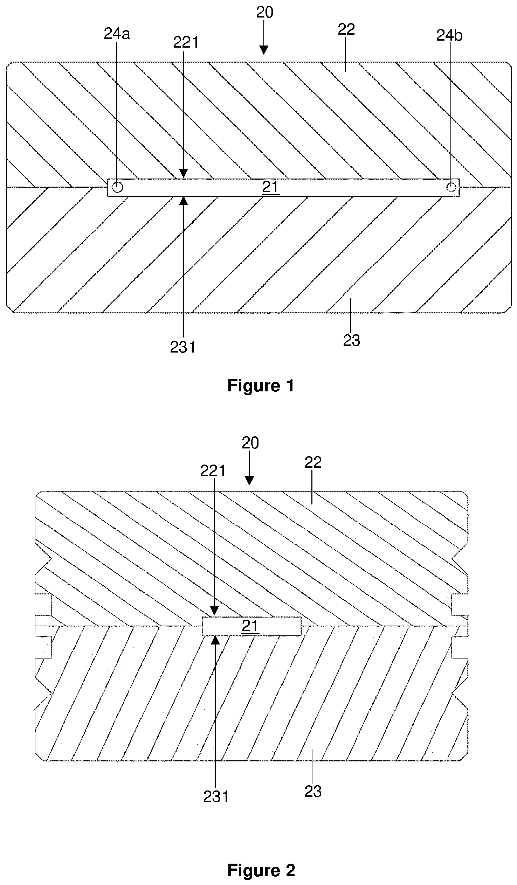

Les figures 1 et 2 représentent un moule 20 utilisé pour la mise en œuvre de l'invention. Un tel moule 20 comprend une cavité 21 délimitée par deux demi-empreintes 22, 23 mobiles l'une par rapport à l'autre. Ces deux demi-empreintes 22, 23 comprennent respectivement des parois 221, 231 qui forment une délimitation de la cavité 21 du moule 20, respectivement les plans supérieur et inférieur de cette cavité 21. Les figures 1 et 2 représentent plus précisément des sections du moule 20 au niveau de la cavité 21, respectivement selon deux plans médians perpendiculaires entre eux. La cavité 21 présente une forme sensiblement plane et rectangulaire, qui correspond à la forme du brin de bracelet à fabriquer, et lesdits deux plans de coupe des deux figures 1, 2 sont des plans médians, respectivement longitudinal, c'est-à-dire orienté selon la longueur de la cavité 21, perpendiculairement à un plan formé par une paroi 221, 231 de cette cavité, et transversal, c'est-à-dire orienté perpendiculairement à la direction longitudinale de la cavité 21, perpendiculairement à un plan formé par une paroi 221, 231 de cette cavité.

Les deux demi-empreintes 22, 23 comprennent respectivement les parois 221, 231 qui sont sensiblement planes et parallèles sur les figures 1 et 2. Alternativement, ces parois 221, 231 peuvent être courbées. Leur forme correspond à la forme des surfaces supérieure et inférieure du brin de bracelet à fabriquer. Des portions de logements 24a, 24b optionnelles sont positionnées au sein de la cavité 21 du moule. Leur fonction sera précisée par la suite.

Le concept de l'invention consiste à positionner un insert et un élément de fixation au sein d'un tel moule de fabrication, avant de remplir le moule de fabrication par un matériau, de sorte à surmouler l'insert et l'élément de fixation, c'est-à-dire les envelopper au moins partiellement dans ledit matériau, de manière suffisante pour les fixer dans le matériau. Ce matériau correspond au matériau principal du brin de bracelet et/ou au matériau visible depuis la surface supérieure et/ou la surface inférieure du brin de bracelet, et sera appelé « matériau du brin de bracelet » ou plus simplement « matériau » par la suite.

Le remplissage du moule peut être fait par tout moyen, notamment par injection ou moulage par compression. S'il s'agit d'un procédé de moulage par injection, le matériau est par exemple injecté à une pression donnée (typiquement comprise entre 80 bar et 150 bar, voire entre 80 bar et 90 bar) dans la cavité 21, alors que le moule est déjà fermé et présente une température donnée (typiquement comprise entre 150°C et 250°C, voire comprise entre 150°C et 200°C). Dans le cas d'un procédé de moulage par compression, une préforme ou une ébauche de matériau du brin est positionnée sur la paroi 231 avant fermeture du moule, puis est compressée à une température donnée (typiquement comprise entre 150°C et 250°C, voire comprise entre 150°C et 200°C). Dans tous les cas, ce matériau vient se positionner au moins en partie autour d'un ou plusieurs éléments de fixation, pour les envelopper et les fixer au brin de bracelet : ce matériau vient donc surmouler l'insert et le ou les éléments de fixation.

Avantageusement, le matériau est un élastomère ou à base d'élastomère, c'est-à-dire comprenant au moins 50% en poids d'élastomère. Notamment, le matériau élastomère peut être un fluoro-élastomère (FKM, FFKM ou FEPM), ou un caoutchouc naturel (NR) ou synthétique (SBR, HNBR, EPDM), ou un vinyle méthylsilicone (VMQ) ou un fluorosilicone (FVMQ). Plus généralement, le matériau du composant peut être un polymère. Il peut notamment s'agir d'un polymère thermoplastique ou thermodurci.

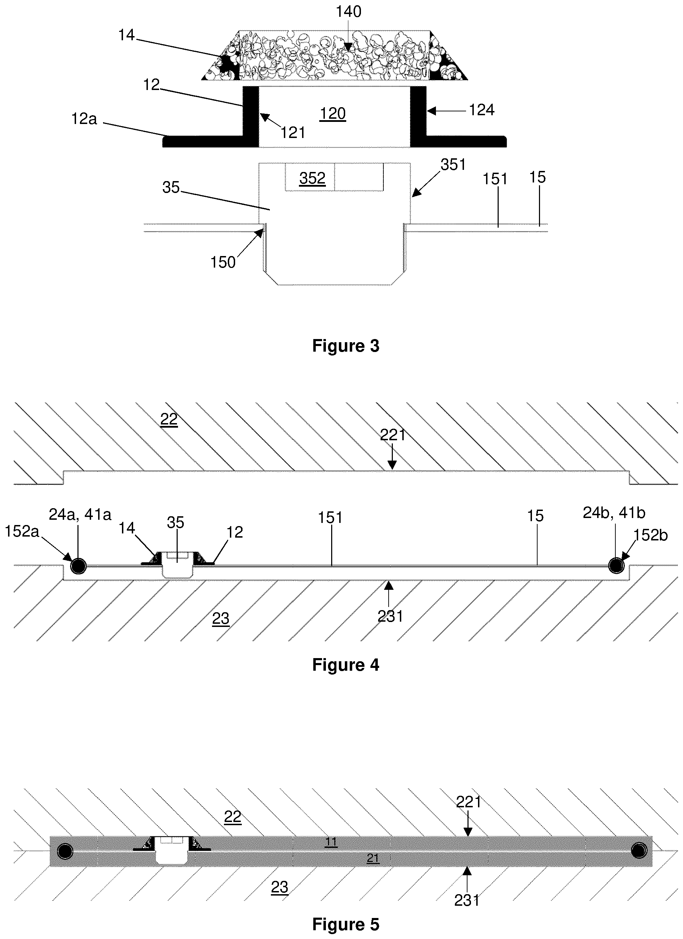

Les figures 3 à 5 illustrent un procédé de fabrication d'un brin de bracelet selon un premier mode de réalisation de l'invention.

Les figures 3 et 4 illustrent une première étape du procédé selon le premier mode de réalisation, qui consiste à positionner au moins un élément de fixation 12 au sein du moule 20 de fabrication par l'intermédiaire d'au moins un élément de guidage 35 agencé sur un insert 15. Dans l'exemple illustré, un seul élément de fixation 12 est positionné, mais en variante, plusieurs éléments de fixation pourraient être positionnés, chacun par l'intermédiaire d'un élément de guidage 35. Il y a ainsi autant d'éléments de guidage 35 que d'éléments de fixation 12.

Dans ce premier mode de réalisation, chaque élément de guidage 35 est un élément saillant, fixé ou venu de matière avec l'insert 15.

Comme cela apparaît sur les figures 3 et 4, l'insert 15 selon un mode de réalisation particulier se présente sous la forme d'une lame 151, qui peut avantageusement être une lame 151 métallique, en particulier une lame 151 en alliage métallique superélastique. Cette lame comprend deux boucles 152a, 152b disposées respectivement au niveau de chacune de ses extrémités longitudinales.

Cet insert 15 sert de support pour le ou les éléments de guidage 35 prévus pour le positionnement du ou des éléments de fixation 12.

Comme cela apparaît plus particulièrement sur la figure 3, un élément de guidage 35 peut prendre la forme d'une vis vissée au sein d'une ouverture traversante 150 de la lame 151. La périphérie de la tête de vis constitue ici une première surface de guidage 351, prévue pour coopérer avec une deuxième surface de guidage 121 agencée sur l'élément de fixation 12.

Dans ce premier mode de réalisation, chaque élément de guidage 35 se présente sous la forme d'un plot cylindrique qui fait saillie de la surface supérieure de l'insert 15, s'étendant ainsi dans la cavité 21 du moule 20. Le contour du plot forme au moins partiellement la première surface de guidage 351.

L'élément de fixation 12 prend, quant à lui, la forme d'une bague dotée d'une ouverture 120 qui est prévue pour réceptionner le plot formant l'élément de guidage 35. La surface intérieure de la bague, délimitant l'ouverture 120, forme la deuxième surface de guidage 121. Dans ce mode de réalisation, l'élément de fixation 12 s'étend sensiblement sur toute la hauteur de la cavité 21 du moule 20 au-dessus de la surface supérieure de l'insert 15 (au jeu d'assemblage près). Avantageusement, l'élément de fixation 12 est plus précisément une bague à portée. Il comprend ainsi une première portion cylindrique supérieure, définissant une ouverture centrale 120, se terminant à sa base par un disque ou une deuxième portion cylindrique, agencé autour de la première portion cylindrique, qui définit une portée 12a.

De manière optionnelle, un élément d'accrochage 14 est associé à l'élément de fixation 12. En particulier, cet élément d'accrochage se présente sous la forme d'une bague dotée d'une ouverture 140, dont le diamètre est prévu pour son positionnement autour de l'élément de fixation 12, selon une étape du procédé selon le premier mode de réalisation plus particulièrement représentée par la figure 3. De plus, cet élément d'accrochage 14 comprend avantageusement une structure alvéolaire de sorte que le matériau 11 du brin de bracelet puisse s'insérer et s'ancrer au sein de cet élément d'accrochage 14, et également entre l'élément de fixation 12 et l'élément d'accrochage 14. Par « structure alvéolaire », nous entendons une structure comprenant une multitude d'ouvertures traversantes qui s'entrecroisent. Avantageusement, l'élément d'accrochage 14 peut se présenter sous la forme d'une mousse métallique. Préférentiellement, l'élément d'accrochage 14 présente une forme conique ou tronconique, de volume augmentant vers l'intérieur de l'épaisseur du brin de bracelet, à savoir selon une direction allant de la surface supérieure vers la surface inférieure du brin de bracelet. Une telle forme a pour avantage de minimiser la visibilité de l'élément d'accrochage 14 depuis la surface supérieure du brin de bracelet. Par ailleurs, une telle forme progressive permet de favoriser l'accroche du matériau 11. Une telle géométrie de l'élément de fixation 12, combinée à un tel élément d'accrochage 14, permet de minimiser très sensiblement, voire d'annuler, le phénomène de bâillement autour de l'élément de fixation 12, à savoir une déformation de l'ouverture du brin autour de l'élément de fixation 12 laissant apparaitre un jour indésirable. En remarque, un tel élément d'accrochage 14 peut en variante être combiné à tous les éléments de fixation de toute variante de réalisation selon l'invention. Il reste optionnel dans tous les cas.

Comme représenté par la figure 3, l'élément de fixation 12 est associé à un élément d'accrochage 14, cet ensemble étant ensuite monté sur un élément de guidage 35, une fois ce dernier positionné sur un insert 15, en dehors ou dans la cavité 21 d'un moule 20, comme représenté par la figure 4.

Le procédé comprend ensuite une deuxième étape, représentée par la figure 5, consistant à remplir le moule 20 de fabrication avec un matériau 11 de sorte à surmouler l'ensemble comprenant l'insert et l'au moins un élément de fixation 12 dans le matériau 11, de sorte à l'envelopper au moins partiellement et à le fixer dans le matériau, et donc dans le brin de bracelet résultant.

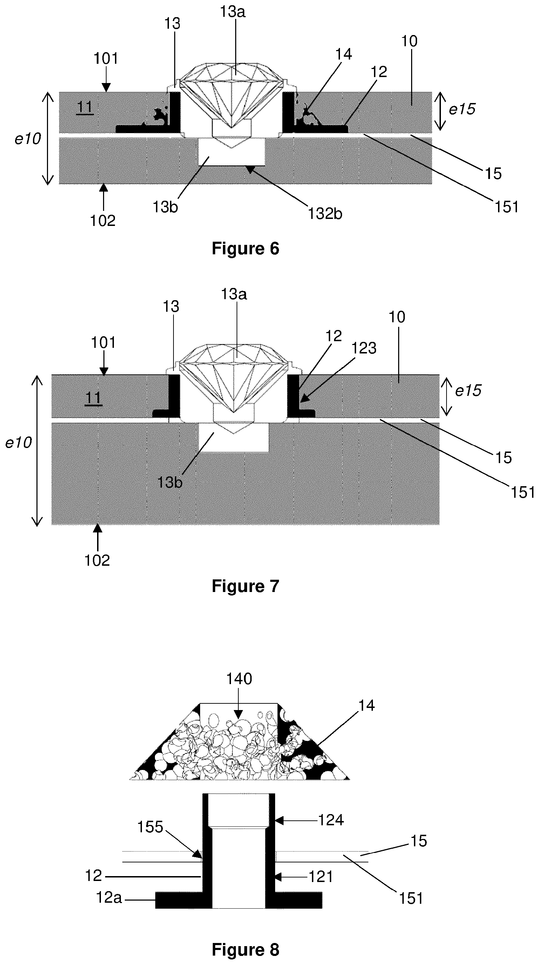

Avantageusement, dans cette deuxième étape, l'élément de guidage 35 permet de faire obstacle à toute entrée de matériau ou de limiter considérablement l'entrée de matériau au sein de l'ouverture 120 de l'élément de fixation 12. Le contour extérieur de l'élément de fixation 12 forme, quant à lui, au moins une surface d'accroche 123 prévue pour venir en contact avec le matériau 11 injecté ou compressé autour de lui (Notamment dans le cas de figure où il n'y a pas d'élément d'accrochage 14, comme représenté par la figure 7).

En synthèse, le procédé de fabrication selon ce premier mode de réalisation comprend ainsi les deux premières étapes précisées ci-dessous.

La première étape du procédé comprend une sous-étape préalable consistant à assembler au moins un élément de guidage 35 sur un insert 15. Cet assemblage peut se faire par tout moyen, autre que le vissage décrit précédemment. Ainsi, l'élément de guidage 35 peut en variante se présenter différemment d'une vis telle que représentée. En remarque, cette étape préalable peut aussi comprendre le montage d'un élément d'accrochage 14 autour de l'élément de fixation 12.

La première étape de positionnement dans le moule de fabrication d'au moins un élément de fixation 12 est donc obtenue par l'intermédiaire de cet élément de guidage 35, et par l'intermédiaire d'un insert 15, lui-même préférentiellement positionné au sein du moule de fabrication.

La première étape comprend ainsi, par exemple, le positionnement de l'insert 15 sur la demi-empreinte 23 du moule. Pour cela, des tiges 41a, 41b sont prévues pour s'enfiler respectivement d'une part au sein de boucles 152a, 152b de l'insert 15, en particulier de la lame 151, et d'autre part au sein de portions de logements 24a, 24b formées sur la demi-empreinte 23 du moule. Ainsi, la lame 151 est positionnée au sein de la cavité 21, et elle est maintenue en suspension à distance des parois longitudinales 221, 231 opposées du moule 20 une fois le moule fermé.

En résumé, le procédé de fabrication d'un brin de bracelet comprend les deux sous-étapes suivantes d'une première étape de positionnement d'au moins un élément de fixation 12 dans un moule :
- Positionner un insert 15 au sein d'une cavité 21 d'un moule de fabrication 20 ;
- Positionner au moins un élément de fixation 12 sur ledit insert 15 par l'intermédiaire d'au moins un élément de guidage 35.

Ces deux sous-étapes peuvent être réalisées successivement, ou dans un ordre inversé, ou sensiblement simultanément.

Optionnellement, la première étape du procédé comprend, en complément des sous-étapes ci-dessus, une autre sous-étape de positionnement d'un élément d'accrochage 14 autour d'un élément de fixation 12, en amont ou lors du positionnement de ce dernier autour d'un élément de guidage 35, comme représenté par la figure 3. A cet effet, la première portion cylindrique de l'élément de fixation 12 comprend une surface de réception 124 de l'élément d'accrochage 14 au niveau de sa périphérie extérieure. Ainsi, l'élément de fixation 12 est inséré au sein de l'ouverture 140 centrale de l'élément d'accrochage 14, cet ensemble pouvant ensuite être positionné sur l'insert 15 par l'intermédiaire de l'élément de guidage 35, puis au sein de la cavité 21 du moule 20.

Le procédé de fabrication comprend ensuite une deuxième étape consistant à remplir le moule de fabrication 20 avec un matériau de sorte à surmouler, c'est à dire envelopper au moins partiellement et fixer, l'insert 15 et l'au moins un élément de fixation 12 dans le matériau.

Le procédé comprend ensuite une troisième étape, non représentée, consistant à démouler le brin de bracelet 10 du moule de fabrication 20. Ce brin de bracelet 10 est ainsi au moins en partie formé par le matériau 11 ayant rempli la cavité 21 du moule 20, l'insert 15 et l'au moins un élément de fixation 12. Dans cette étape de démoulage, la demi-empreinte 22 supérieure est écartée de la demi-empreinte 23 inférieure, qui est fixe selon cet exemple de réalisation. En remarque, le résultat obtenu lors de cette étape de démoulage peut n'être qu'une ébauche du brin de bracelet, qui exige encore des opérations de finition, comme des découpes, un traitement de surface, etc., avant d'obtenir le brin de bracelet finalisé.

Après démoulage du brin de bracelet, le procédé comprend une étape intermédiaire consistant à ôter l'au moins un élément de guidage 35 de l'ébauche de brin de bracelet, notamment par dévissage selon l'exemple illustré. Ensuite, un élément d'ornement 13 peut par exemple être fixé au sein de l'ouverture 120 d'au moins un élément de fixation 12, notamment par chassage. Au préalable, les éventuels débords non souhaités de matériau 11, notamment au sein de l'ouverture 120, qui résulteraient de la deuxième étape de remplissage, peuvent être supprimés selon toute technique connue de l'homme de métier comme, par exemple, un sablage cryogénique. Par ailleurs, un élément d'ornement 13 peut comprendre un chaton 13b au sein duquel est fixée une pierre 13a visible depuis la surface supérieure 101 du brin de bracelet.

La figure 6 illustre ainsi une première variante de brin de bracelet obtenu par le procédé selon le premier mode de réalisation. La lame 151 formant l'insert 15 est positionnée au centre de l'épaisseur e10 du brin de bracelet. Autrement dit, la lame 151 se trouve à équidistance ou sensiblement à équidistance des surfaces supérieure 101 et inférieure 102 du brin de bracelet, avec une distance e15 la séparant de la surface supérieure 101 égale ou sensiblement égale à e10/2. Ainsi, la lame 151 constitue ou se rapproche de la nappe de fibres neutres du brin de bracelet lorsque ce dernier est soumis à une flexion simple. En remarque, cette lame 151 remplit ainsi par ailleurs une fonction de renfort du brin de bracelet.

La figure 7 illustre une deuxième variante de brin de bracelet obtenu par le procédé selon ce premier mode de réalisation. Le brin de bracelet se différencie de celui selon la première variante par le fait que la lame 151 est positionnée plus proche de la surface supérieure 101 du brin de bracelet, de sorte à décaler la nappe de fibres neutres vers cette surface supérieure 101. Cela est en effet rendu possible par le fait que le matériau de la lame 151 est avantageusement plus rigide que le matériau du brin de bracelet, à savoir le matériau enveloppant au moins partiellement au moins un élément de fixation. Ainsi, dans cette conception, les épaisseurs respectent les conditions suivantes : e15 < e10/2, voire e15 < e10/3. Pour obtenir le brin de bracelet selon cette deuxième variante de réalisation, les positions des logements 24a, 24b au sein de la cavité 21 du moule peuvent être décalées de sorte à rapprocher la lame 151 d'une paroi longitudinale d'une demi-empreinte du moule 20, lors de la première étape du procédé. Cette deuxième variante de réalisation présente l'avantage de minimiser les phénomènes de traction autour de l'élément de fixation 12 lorsque le brin de bracelet est fléchi. Des essais montrent en effet qu'une telle conception permet de limiter sensiblement, voire d'obvier, tout phénomène de bâillement autour de l'élément de fixation 12, et ce sans nécessiter la mise en place d'un élément d'accrochage 14. Il est également possible de minimiser la dimension, en particulier le diamètre de la portée 12a, voire même de supprimer la portée 12a de l'élément de fixation 12. Une telle conception selon cette deuxième variante de réalisation a donc aussi pour avantage de limiter l'encombrement des éléments nécessaires à la fixation d'un élément d'ornement 13 sur le brin de bracelet, d'une part par la suppression de l'élément d'accrochage 14, et d'autre part par la minimisation du format de l'élément de fixation 12. Une telle conception a donc pour avantage de permettre le rapprochement de différents éléments d'ornement, et donc éventuellement de maximiser leur nombre sur le brin de bracelet, par exemple à des fins esthétiques.

Selon une autre variante de réalisation non représentée, l'élément de fixation peut se présenter sous la forme d'une simple bague cylindrique. En variante, cette bague peut prendre une autre forme, par exemple qui s'étend totalement selon d'une direction perpendiculaire à la surface supérieure 101 du brin de bracelet, et présente notamment une forme cylindrique ou tronconique autour d'un axe parallèle à cette direction, et/ou présente une section transversale annulaire.

Dans ces réalisations, l'utilisation d'un élément d'accrochage 14 est optionnelle. Dans l'exemple illustré par la figure 6, le matériau 11 est plus particulièrement inséré dans la structure alvéolaire de l'élément d'accrochage 14.

De plus, afin de favoriser l'accroche du matériau 11 autour du ou des éléments de fixation 12, leurs surfaces d'accroche 123, confondues avec la surface de réception 124 susmentionnée, peuvent être texturées par toute technique connue de l'homme du métier, afin de les rendre particulièrement rugueuses. Alternativement ou complémentairement, ces surfaces peuvent être revêtues d'un primaire d'accroche. Selon la variante représentée, une surface d'accroche est formée par la surface périphérique extérieure de la bague cylindrique formant l'élément de fixation 12.

De plus, la portée 12a de l'élément de fixation 12 se trouve ainsi noyée dans le matériau 11 du brin de bracelet, à savoir dans l'épaisseur du brin de bracelet, puisque le matériau 11 s'étend de part et d'autre des surfaces supérieure et inférieure de ladite portée 12a, cette dernière étant disposée sur l'insert 15. Cette variante de réalisation permet de minimiser la flexion du brin de bracelet localement, autour de la surface périphérique de l'élément de fixation 12, notamment autour de la première portion cylindrique de l'élément de fixation 12, en particulier au niveau de la portée 12a formée par le disque ou la deuxième portion cylindrique de l'élément de fixation 12.

Dans ces réalisations, l'élément de fixation 12 résultant repose sur l'insert 15.

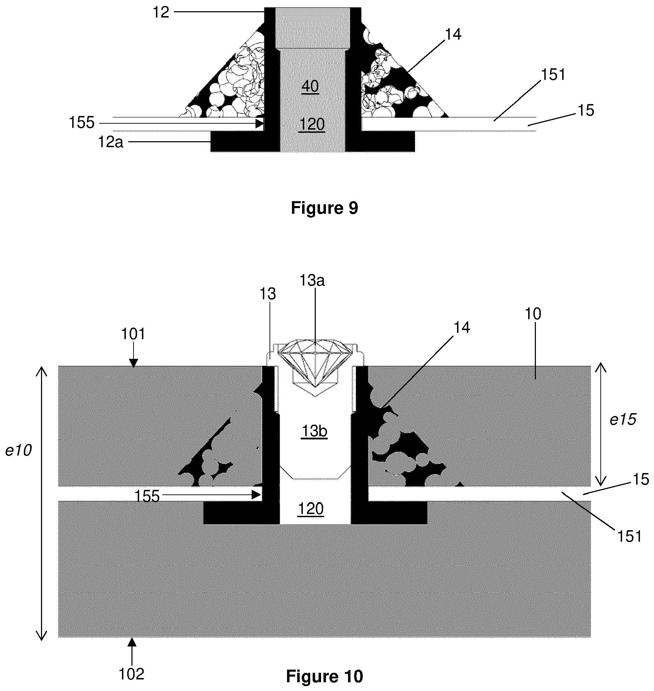

La conformation de l'élément d'ornement 13, en particulier du chaton 13b, peut être prévue de sorte à pouvoir être actionnée depuis la surface inférieure 102 du brin de bracelet 10. Par exemple, le chaton 13b peut comprendre une surface d'actionnement 132b faisant saillie de l'élément de fixation 12, c'est-à-dire s'étendant plus profondément dans l'épaisseur du brin de bracelet que l'élément de fixation 12, de sorte à présenter une surface inférieure s'étendant parallèlement ou sensiblement parallèlement à la surface inférieure 102 du brin de bracelet, et à proximité de cette surface inférieure. Une telle surface pourra, par exemple, coopérer avec un outillage dédié de sorte à permettre le déchassage de l'élément d'ornement. Alternativement, l'élément d'ornement 13, en particulier le chaton 13b, peut être conformé de sorte à ne pas pouvoir être actionné une fois celui-ci assemblé au sein de l'élément de fixation 12. A titre d'exemple, le chaton 13b peut être noyé au sein de l'élément de fixation 12, comme cela sera illustré en référence avec la figure 10 par la suite.

Le procédé selon le deuxième mode de réalisation constitue une alternative au premier mode. L'au moins un élément de fixation 12 est ici positionné sur l'insert 15 non pas par un élément de guidage 35 positionné préalablement sur la lame 151, mais directement au sein d'une ouverture 155 formée sur la lame, faisant office d'élément de guidage 35, comme représenté par la figure 8. A cet effet, l'au moins un élément de fixation 12 comprend une surface de guidage 121 prévue pour coopérer avec le contour de l'ouverture 155, qui forme ainsi un élément de guidage 35. En particulier, l'au moins un élément de fixation 12 se présente sous la forme d'une bague dont la périphérie extérieure comprend la surface de guidage 121 qui est prévue pour venir se loger dans l'ouverture 155. Afin de permettre le maintien de la bague sur la lame 151, la périphérie extérieure de la bague comprend également une surface de réception 124, notamment de chassage, d'un élément d'accrochage 14 en forme de bague. En outre, l'élément de fixation 12 comprend également une portée 12a afin de permettre sa retenue axiale sur la lame 151. En remarque, alternativement ou complémentairement, l'insert 15 pourrait présenter ou comprendre toute autre forme remplissant la fonction d'élément de guidage, comme une saillie par exemple.

Les figures 8 et 9 illustrent schématiquement des étapes du procédé de fabrication d'un brin de bracelet selon ce deuxième mode de réalisation.

Lors de la première étape représentée par la figure 8, l'élément de fixation 12 est assemblé sur un insert 15, qui se présente sous la forme d'une lame 151, comme dans le premier mode de réalisation. Dans cette réalisation, l'élément de fixation 12 est enfilée dans une ouverture 155 depuis une surface inférieure de la lame 151, puis un élément d'accrochage 14 est fixé sur l'élément de fixation 12 depuis la surface supérieure opposée, notamment par chassage autour de la surface extérieure de l'élément de fixation 12.

La première étape comprend aussi une nouvelle sous-étape, représentée par la figure 9, mise en œuvre avant la deuxième étape de remplissage du moule par le matériau 11 du brin de bracelet. Cette sous-étape consiste à obturer l'ouverture 120 de l'élément de fixation 12 par un matériau de remplissage. Par exemple, ce matériau de remplissage peut être un silicone à deux composants, contenant du vinyle, de l'acide silicique et des matières d'agrégation, qui présente l'avantage de polymériser en quelques minutes. Par exemple, ce matériau peut être celui connu par sa dénomination commerciale de Plastiform^{™} F50 ou Plastiform^{™} F85. Le matériau de remplissage est par exemple déposé par le biais d'un pistolet doseur, puis est immédiatement durci de sorte à former un obstacle 40 à toute rentrée de matériau 11 durant la deuxième étape au sein de l'ouverture 120 de l'élément de fixation 12.

Après le démoulage, le procédé comprend une étape intermédiaire de retrait de l'obstacle 40 formé par le matériau de remplissage déposé dans l'ouverture 120 de l'élément de fixation 12, pour libérer cette ouverture 120.

Les autres étapes du procédé restent identiques à celles décrites en référence avec le premier mode de réalisation.

La figure 10 illustre, à titre d'exemple, une première variante de réalisation du brin de bracelet obtenu par le procédé selon ce deuxième mode de réalisation dans laquelle la lame 151 formant l'insert 15 se trouve sensiblement au milieu de l'épaisseur du brin de bracelet. En deuxième variante non représentée, cette lame pourrait être positionnée plus proche de la surface supérieure du brin de bracelet, comme décrit dans le cadre du procédé selon le premier mode de réalisation permettant d'obtenir un brin de bracelet selon la deuxième variante. En remarque, une telle deuxième variante de brin de bracelet présente aussi l'avantage de minimiser le format de l'élément d'accrochage 14, outre la simplification de l'élément de fixation 12. Dans ces réalisations, l'élément de fixation 12 résultant est fixé sur l'insert 15.

Dans tous les modes de réalisation, l'élément de fixation 12 peut être fabriqué en tout matériau susceptible de résister aux températures associées au procédé. Avantageusement, ce matériau est plus particulièrement adapté de façon à permettre le chassage de l'élément d'ornement 13. A titre d'exemple, ce matériau peut être un alliage métallique tel qu'un alliage cuivreux comme le laiton ou le CuBe2, ou encore un acier inoxydable.

Dans les variantes de réalisation décrites précédemment, les éléments de fixation sont prévus pour réceptionner des éléments d'ornement. Ils pourraient naturellement être prévus pour recevoir tout autre élément, par exemple dans le but de remplir une nouvelle fonctionnalité. Par exemple, dans une construction particulière de bracelet comprenant une boucle à ardillon, les ouvertures des éléments de fixation pourraient former une série d'ouvertures alignées, prévues pour réceptionner l'ardillon et donc participer au réglage de la longueur du bracelet. Une telle construction aurait pour avantage de supprimer toute déformation de ces ouvertures prévues pour réceptionner l'ardillon, qui sont usuellement formées directement sur le brin de bracelet en découpant le matériau. Un élément de fixation selon l'invention peut donc remplir des fonctions diverses, et il n'y a donc pas nécessairement une fixation permanente d'un élément distinct dans un élément de fixation.

D'autre part, comme décrit précédemment, dans toutes les variantes de réalisation, un élément de fixation peut prendre la forme d'une bague, comprenant une portée ou non. Une telle portée a pour avantage limiter localement la flexion du brin de bracelet autour de l'élément de fixation. Naturellement, l'invention ne se limite pas à la forme représentée des éléments de fixation, qui peuvent prendre toute autre forme selon les fonctionnalités recherchées. Par exemple, un élément de fixation peut se présenter sous la forme d'une bague de forme cylindrique ou tronconique ou de forme quelconque, agencée autour d'un axe, par exemple de section transversale audit axe de forme annulaire. Préférentiellement, dans toutes les variantes de réalisation, l'élément de fixation, en particulier la bague faisant office d'élément de fixation, comprend une surface qui affleure la surface supérieure du brin de bracelet.

Dans les modes de réalisation décrits, un élément de fixation est positionné dans un moule par l'intermédiaire d'au moins un élément de guidage. Un tel élément de guidage peut se présenter selon différentes formes. Par exemple, il peut être un élément faisant saillie selon une certaine direction au sein d'une cavité du moule de fabrication, notamment être agencé symétriquement autour d'un axe parallèle à ladite direction, notamment de forme cylindrique ou tronconique et/ou de section transversale audit axe de forme circulaire.

De plus, dans toutes les variantes de réalisation, l'élément de fixation peut être combiné ou non à un élément d'accrochage, ce dernier étant prévu pour maximiser l'ancrage du matériau constituant l'enveloppe du composant autour de l'élément de fixation. Préférentiellement, un élément d'accrochage peut être en mousse d'aluminium ou de titane.

Comme décrit précédemment, un élément d'ornement peut se présenter sous la forme d'un assemblage tel qu'une pierre sertie au sein d'un chaton. La pierre peut par exemple être une pierre naturelle telle qu'une pierre précieuse (diamant, rubis, saphir, émeraude) ou une pierre fine comme le jaspe, par exemple. La pierre peut aussi être organique, et peut par exemple se présenter sous la forme d'une perle ou de nacre. Le chaton peut par exemple être fabriqué en un alliage précieux tel qu'un alliage à base d'or.

Alternativement, l'élément d'ornement peut être fait d'un seul tenant. Il peut par exemple être fabriqué en une céramique, par exemple une céramique principalement ou majoritairement composée de zircone, ou d'alumine, ou de nitrure de silicium, ou de carbure de bore, ou de nitrure d'aluminium. Alternativement, l'élément d'ornement peut aussi être fait en un matériau composite comme un composite alumine-zircone ZTA / ATZ. Alternativement encore, l'élément d'ornement peut être fait en un alliage métallique précieux tel qu'un alliage à base d'or ou de platine. Il peut par ailleurs comprendre un motif.

D'autre part, l'insert remplit notamment avantageusement une fonction de renfort. De plus, cet insert a été décrit comme se présentant sous la forme d'une lame. Naturellement, une telle lame peut occuper différentes surfaces, s'étendre sensiblement de manière continue sur une dimension significative d'un brin de bracelet, par exemple sur au moins 50%, voire 70% de sa longueur, ou en variante prendre une dimension restreinte, se trouver uniquement au niveau du ou des éléments de fixation. De plus, l'invention ne se limite pas à un insert présentant la forme d'une lame.

L'invention porte aussi sur une pièce d'horlogerie, notamment une montre-bracelet, comprenant un tel brin de bracelet.

## Revendications

1. Procédé de fabrication d'un brin de bracelet (10), **caractérisé en ce qu'**il comprend les étapes suivantes :
- Positionner un insert (15) au sein d'une cavité (21) d'un moule de fabrication (20) ;
- Positionner au moins un élément de fixation (12) sur ledit insert (15) par l'intermédiaire d'au moins un élément de guidage (35) ;
- Remplir le moule de fabrication (20) avec un matériau de sorte à surmouler, c'est à dire envelopper au moins partiellement et fixer, l'insert (15) et l'au moins un élément de fixation (12) dans le matériau ;
- Démouler le brin de bracelet (10) du moule de fabrication (20), ce brin de bracelet (10) étant au moins en partie formé par ledit matériau, l'insert (15), et l'au moins un élément de fixation (12).

2. Procédé de fabrication d'un brin de bracelet (10) selon la revendication précédente, **caractérisé en ce que** l'étape consistant à positionner au moins un élément de fixation (12) sur ledit insert (15) comprend les sous-étapes suivantes :
- Fixer un élément de guidage (35) rapporté dans une ouverture de l'insert (15), notamment par vissage, ou se munir d'un insert (15) comprenant une saillie formant un élément de guidage (35) ; et
- Positionner l'au moins un élément de fixation (12) autour dudit élément de guidage (35).

3. Procédé de fabrication d'un brin de bracelet (10) selon la revendication 1, **caractérisé en ce que** l'étape consistant à positionner au moins un élément de fixation (12) sur ledit insert (15) comprend l'insertion, notamment la fixation, du au moins un élément de fixation (12) dans une ouverture (155) formant un élément de guidage (35) dudit insert (15).

4. Procédé de fabrication d'un brin de bracelet (10) selon la revendication précédente, **caractérisé en ce que** l'au moins un élément de fixation (12) comprend une ouverture centrale (120) et **en ce que** le procédé comprend une étape intermédiaire consistant à obturer ladite ouverture centrale (120) avec un matériau de remplissage, avant la mise en œuvre de l'étape consistant à remplir le moule de fabrication (20) avec un matériau, de sorte que ledit matériau n'occupe pas l'ouverture centrale (120), puis **en ce qu'**il comprend une étape de retrait dudit matériau de remplissage.

5. Procédé de fabrication d'un brin de bracelet (10) selon l'une des revendications précédentes, **caractérisé en ce que** l'insert (15) s'étend dans la direction longitudinale du brin de bracelet (10) et comprend un dispositif de positionnement, voire de fixation, sur chacune de ses deux extrémités, par lequel ledit insert est positionné, voire fixé, au sein de la cavité (21) du moule de fabrication (20), sensiblement parallèlement aux surfaces opposées supérieure (221) et inférieure (231) de la cavité (21) du moule de fabrication (20), et **en ce qu'**il est positionné à équidistance de ces deux surfaces supérieure (221) et inférieure (231) ou **en ce qu'**il est positionné de manière plus proche de la surface supérieure (221).

6. Procédé de fabrication d'un brin de bracelet (10) selon l'une des revendications 1 ou 2, **caractérisé en ce que** l'au moins un élément de guidage (35) est un élément faisant saillie selon une direction au sein de la cavité (21) du moule de fabrication (20), notamment agencé symétriquement autour d'un axe parallèle à ladite direction, notamment de forme cylindrique ou tronconique et/ou de section transversale audit axe de forme circulaire, et **en ce que** l'au moins un élément de fixation (12) s'étend autour de l'au moins un élément de guidage (35), et se présente notamment sous la forme d'une bague de forme cylindrique ou tronconique et/ou de section transversale audit axe de forme annulaire et/ou sous la forme d'une bague à portée.

7. Procédé de fabrication d'un brin de bracelet (10) selon l'une des revendications précédentes, **caractérisé en ce qu'**il comprend une étape intermédiaire consistant à texturer et/ou à ajouter un primaire d'accrochage sur une surface (123) de l'au moins un élément de fixation (12) destinée à recevoir le surmoulage dudit matériau et/ou **en ce qu'**il comprend une étape intermédiaire consistant à ajouter un élément d'accrochage (14), notamment une bague d'accrochage, agencé au moins partiellement autour de l'au moins un élément de fixation (12), notamment un élément d'accrochage présentant une structure alvéolaire, comme une mousse d'aluminium ou de titane.

8. Procédé de fabrication d'un brin de bracelet selon l'une des revendications précédentes, **caractérisé en ce que** l'étape consistant à remplir le moule de fabrication (20) avec un matériau consiste en une injection sous pression dudit matériau dans une cavité (21) du moule de fabrication (20) ou consiste en un moulage par compression.

9. Procédé de fabrication d'un brin de bracelet selon l'une des revendications précédentes, **caractérisé en ce qu'**il comprend une étape de retrait de l'élément de guidage (35) après l'étape consistant à démouler le brin de bracelet (10).

10. Procédé de fabrication d'un brin de bracelet selon l'une des revendications précédentes, **caractérisé en ce qu'**il comprend une étape de fixation d'un élément d'ornement (13) sur l'au moins un élément de fixation (12), notamment par chassage.

11. Brin de bracelet (10) à base d'un matériau (11), **caractérisé en ce qu'**il comprend un insert (15), et au moins un élément de fixation (12), reposant sur l'insert (15) ou étant fixé sur l'insert (15), surmoulés par ledit matériau, c'est-à-dire enveloppés au moins partiellement et fixés par ledit matériau (11).

12. Brin de bracelet (10) selon la revendication précédente, **caractérisé en ce que** l'insert (15) se présente sous la forme d'Fune lame (151), notamment une lame métallique, en particulier une lame en alliage métallique superélastique, et **en ce que** l'insert (15) comprend deux dispositifs de fixation (152a, 152b) respectivement à chacune de ses deux extrémités, pour permettre la liaison du brin de bracelet (10) avec d'une part une boîte de montre et d'autre part un autre brin de bracelet, notamment par l'intermédiaire d'un fermoir.

13. Brin de bracelet (10) selon la revendication précédente, **caractérisé en ce que** l'insert (15) s'étend sensiblement parallèlement aux surfaces opposées supérieure (101) et inférieure (102) du brin de bracelet, et **en ce qu'**il est positionné à équidistance de ces deux surfaces supérieure (101) ou inférieure (102) ou **en ce qu'**il est positionné de manière plus proche de la surface supérieure (101), c'est-à-dire à une distance e15 de cette surface supérieure (101) telle que e15 < e10/2, voire telle que e15 < e10/3, où e10 est l'épaisseur totale du brin de bracelet (10).

14. Brin de bracelet (10) selon l'une des revendications 11 à 13, **caractérisé en ce que** l'au moins un élément de fixation (12) se présente sous la forme d'une bague de forme cylindrique ou tronconique et/ou de section transversale de forme annulaire, et/ou sous la forme d'une bague à portée.

15. Brin de bracelet (10) selon l'une des revendications 11 à 14, **caractérisé en ce que** l'au moins un élément de fixation (12) s'étend sur toute l'épaisseur entre l'insert (15) et la surface supérieure (101) du brin de bracelet (10).

16. Brin de bracelet (10) selon l'une des revendications 11 à 15, **caractérisé en ce que** l'au moins un élément de fixation (12) comprend une surface texturée et/ou comprenant un primaire d'accrochage sur laquelle ledit matériau est surmoulé, et/ou **en ce qu'**il comprend un élément d'accrochage (14), notamment une bague d'accrochage, agencé au moins partiellement autour de l'élément de fixation (12), notamment un élément d'accrochage (14) présentant une structure alvéolaire, comme une mousse d'aluminium ou de titane, dans laquelle ledit matériau est inséré.

17. Brin de bracelet (10) selon l'une des revendications 11 à 16, **caractérisé en ce que** ledit matériau est un polymère thermoplastique ou thermodurci ou un élastomère ou à base d'élastomère, notamment un fluoro-élastomère (FKM, FFKM ou FEPM), ou un caoutchouc naturel (NR) ou synthétique (SBR, HNBR, EPDM), ou un vinyle méthylsilicone (VMQ) ou un fluorosilicone (FVMQ), et/ou **en ce que** l'au moins un élément de fixation (12) est en métal ou en alliage métallique.

18. Brin de bracelet (10) selon l'une des revendications 11 à 17, **caractérisé en ce qu'**il comprend un élément d'ornement (13), comme une pierre dans un chaton ou un élément monobloc, fixé, notamment par chassage, sur l'au moins un élément de fixation (12) ou **en ce qu'**il comprend plusieurs éléments de fixation (12) formant des portions de fixation d'un brin de bracelet, comme des trous pour une boucle à ardillon.

19. Pièce d'horlogerie, notamment montre-bracelet, **caractérisée en ce qu'**elle comprend au moins un brin de bracelet (10) selon l'une des revendications 11 à 18.
